(19) Europäisches Patentamt / European Patent Office / Office européen des brevets

(11) **EP 2 249 594 B1**

(12) **EUROPEAN PATENT SPECIFICATION**

(45) Date of publication and mention
of the grant of the patent:
**21.03.2012 Bulletin 2012/12**

(51) Int Cl.:
*H04W 16/20* (2009.01)

(21) Application number: **09006174.8**

(22) Date of filing: **06.05.2009**

(54) **Estimation of the shadowing component in a wireless communication system**

Schätzung des Abschirmungsanteils in einem drahtlosen Kommunikationssystem

Évaluation du composant d'ombrage dans un système de communication sans fil

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**10.11.2010 Bulletin 2010/45**

(73) Proprietor: **EADS Deutschland GmbH**
**85521 Ottobrunn (DE)**

(72) Inventors:
• **Dimitrov, Svilen**
**Edinburgh EH8 8BW (GB)**
• **Cappitelli, Mario**
**22763 Hamburg (DE)**
• **Mesleh, Raed**
**47315-4031 Tabuk (SA)**
• **Haas, Harald**
**Edinburgh EH105RE (GB)**

(56) References cited:
**WO-A-2008/004955**

• **MORAITIS N ET AL: "Propagation measurements inside different civil aircrafts and comparison with EM techniques" ANTENNAS AND PROPAGATION, 2009. EUCAP 2009. 3RD EUROPEAN CONFERENCE ON, IEEE, PISCATAWAY, NJ, USA, 23 March 2009 (2009-03-23), pages 887-891, XP031469933 ISBN: 978-1-4244-4753-4**
• **SCHMIDT I ET AL: "UWB propagation channels within an aircraft and an office building environment" ANTENNAS AND PROPAGATION SOCIETY INTERNATIONAL SYMPOSIUM, 2008. AP-S 2008. IEEE, IEEE, PISCATAWAY, NJ, USA, 5 July 2008 (2008-07-05), pages 1-4, XP031342513 ISBN: 978-1-4244-2041-4**
• **JACOB M ET AL: "Influence of passengers on the uwb propagation channel within a large wide-bodied aircraft" ANTENNAS AND PROPAGATION, 2009. EUCAP 2009. 3RD EUROPEAN CONFERENCE ON, IEEE, PISCATAWAY, NJ, USA, 23 March 2009 (2009-03-23), pages 882-886, XP031469932 ISBN: 978-1-4244-4753-4**
• **PAKRAVAN M R ET AL: "Indoor Wireless Infrared Channel Characterization by Measurements" IEEE TRANSACTIONS ON VEHICULAR TECHNOLOGY, IEEE SERVICE CENTER, PISCATAWAY, NJ, US, vol. 50, no. 4, 1 July 2001 (2001-07-01), XP011064286 ISSN: 0018-9545**

EP 2 249 594 B1

**Description**

FIELD OF THE INVENTION

The invention relates to wireless communication systems. In particular, the invention relates to a method for estimation of a probability distribution function of shadowing in a wireless communication system, a program element for executing the method and a computer-readable medium storing the program element.

BACKGROUND OF THE INVENTION

The development of a wireless system requires thorough understanding and characterization of the propagation environment. Of high importance is a statistical model of the path loss as a function of the distance between a receiver unit and a transmitter unit in the wireless system. Such a model facilitates the design of the radiation and the reception properties of the transmitter units and receiver units, the transmit power, the number and/or formation of single transmitters in a transmitter unit and the number and/or formation of single receivers in a receiver unit.

The article "Propagation Measurement inside Different Civil Aircrafts and Comparison with EM Techniques", 3rd European Conference on Antennas and Propagation 2009, EuCAP 2009, pages 887 to 891 by Moraitis et al. relates to the experimental measurement of path loss functions of narrowband receivers and transmitters inside an aircraft cabin.

The article "UWB Propagation Channels within an Aircraft and an Official Building Environment", Antennas and Propagation Society International Symposium 2008, IEEE by Schmidt et al. relates to the measurement of the path loss of UWB channels.

SUMMARY OF THE INVENTION

It is an object of the invention to provide characterizations of the propagation environment of a wireless communication system inside a room.

According to an embodiment of the invention, a method for estimation of a probability distribution function of a shadowing in a wireless communication system is provided. The wireless communication system comprises a room having a predefined geometry and a transmitter unit inside the room. The method comprises the steps of: selecting a path inside the room along which a receiver unit can be positioned; selecting a set of locations within a part of the room on the basis of the geometry of the room and the path; determining a path loss value for each location of the set of locations, wherein the path loss value describes the path loss of the radiation detected by the receiver unit at the location; calculating a two-dimensional result set comprising points having a first dimension and a second dimension, wherein the first dimension of a point is the special distance of a location of the set of locations to the transmitter unit and the second dimension is the path loss value at the respective location; selecting a mathematical (statistical) path loss model; calculating a mean value curve for the result set on the basis of the path loss model; calculating the shape of the probability distribution function from the result set, wherein a distance of a point of the result set to a mean value of the mean value curve is determined by a distance function.

For estimating or determining a probability distribution function of a shadowing component in a, for example optical, wireless communication system, only certain locations in the vicinity of a path are selected. The selection of the locations is further carried out on the basis of the geometry of the room in which the wireless communication system is situated. The path may represent the movement of a movable receiver unit detecting radiation emitted by a fixed transmitter unit. At the selected locations a path loss value of the radiation is determined. From the spatial distance of the locations and the respective path loss value at each location the probability distribution function is calculated.

In particular, the shadowing estimation method may support the development of a statistical path loss model of an optical wireless communication system that may be arranged inside an aircraft cabin.

Having established the probability distribution function of the shadowing component, the selected path loss model of a specific communication scenario (which may be defined by mutual orientation and properties of transmitters and receivers) may be completed. The path loss model may facilitate the calculation of the link budget, the design of the transmitter units and the receiver units, the design of a cellular system of the wireless communication system, the calculation of signal-to-interference ratio (SIR) maps, and the development of a handover algorithm.

The estimation of path loss may be a major component in the analysis and design of the link budget of a telecommunication system. The link budget may be the accounting of all the gains and losses from the transmitter unit through the medium to the receiver unit.

Shadowing or path loss may be the loss or the fading of a signal emitted by a transmitter unit and detected by a receiver unit due to reflections on objects and shielding of objects, in particular borders of a room or a cavity comprised by the wireless communication system. Path loss or path attenuation may be the reduction in power density or attenuation of a wave propagating through space.

With the method for estimation of a probability distribution function of a shadowing component in a wireless communication system, a statistical model of the path loss as a function of the distance is provided. With this, the development of a wireless communication system, in particular a cellular infrared wireless system for an aircraft, may be facilitated. In particular, the statistical model may facilitate the design of the radiation and reception properties of transmitter units and receiver units. Such design properties may comprise, for example, the transmit power of light emitting diodes (LEDs) as transmitters of a transmitter unit, the number and/or formation of the LEDs in a transmitter unit, the sensitivity area of a photodiode (PD) and the number/formation of photodiodes as receivers of a receiver unit. The transmitter unit may be adapted to emit a radiation, wherein the room comprises borders which may be adapted to reflect the radiation, wherein the receiver unit may be adapted to detect the radiation emitted by the transmitter unit and reflected by the borders of the room.

The transmitter unit may be positioned at a predefined position within the room and the room may comprise objects inside the room which define further borders of the room.

The transmitter unit may be adapted to emit or send radiation with respect to a radiation characteristic. The power of the radiation emitted by a transmitter unit with homogeneous radiation characteristic is equal in each spatial direction. For a transmitter unit with an inhomogeneous radiation characteristic, the power of radiation emitted in one direction may be higher than the power of radiation emitted in another direction.

Also, the receiver unit may be adapted to detect radiation with respect to a detection characteristic. The radiation falling onto a receiver unit with an inhomogeneous detection characteristic from one direction may result in a output from the receiver unit, which differs from the output of the receiver unit for radiation of the same power falling onto the receiver unit in a different direction.

Since any change in the predefined geometry of a room, the position and the orientation of the transmitter unit and the position and orientation of the receiver unit influences the path loss of the receiver unit with respect to the transmitter unit, plurality of communication scenarios may be possible inside a room. The path selected inside the room may represent positions of a receiver unit inside the room for a specific communication scenario for which the probability distribution function of the shadowing component has to be determined or estimated. The path may be a straight line.

The estimation method may be used for consistently evaluating the shadowing effects in different communication scenarios. According to a communication scenario a path representing the communication scenario may be selected.

The collected measurement values of path loss form a two-dimensional set. The first dimension of a point of the two-dimensional set is the distance from the transmitter unit and the second dimension of this point is the path loss value at the particular distance from the transmitter unit. Depending on the assumed mathematical path loss model, a corresponding regression curve may be fitted through the scattered points of the two-dimensional result set, for example by a least square estimation. The regression curve represents a mean value curve.

To reduce the calculation effort, it may be beneficial to restrict the set of locations to certain areas, volumes, ranges or parts of the room. In this way, the number of locations may be reduced. Further, in order to improve the estimation of the probability distribution function of the shadowing component, it may be beneficial to restrict the locations of the set of locations to more concrete areas, volumes, ranges or parts of the room. In this way, mainly locations strongly influencing the shape of the probability distribution function are counted. In the following embodiments restricting the set of locations are presented.

According to an embodiment of the invention, the borders of the room may comprise materials having certain reflection characteristics, and the shadowing component is estimated based on the reflection characteristics of the material. The calculation or estimating may be based on a diffuse scattering of rays emitted by the emitter unit, or may be based on a mirror like scattering with few diffuse scattered components.

According to an embodiment of the invention, the wireless communication system may comprise a plurality of transmitter units and/or receiver units.

According to an embodiment of the invention, selecting the set of locations comprises: selecting a set of spheres, each sphere having a predefined radius and centred at the transmitter unit; selecting locations on the spheres, thereby generating the set of locations. By limiting the locations to spheres centred to the transmitter unit, only locations with predefined distance to the transmitter unit are selected, thereby reducing the number of locations for which the path loss value has to be measured or calculated.

According to an embodiment of the invention, selecting the set of location comprises: selecting a number of circles, wherein each circle is orthogonal to a straight line from the centre of the circle to the transmitter unit; selecting locations on the circles, thereby generating the set of locations. By limiting locations to circles, the number of locations can be reduced, reducing a calculation or a measurement effort for the estimation method.

According to an embodiment of the invention, the circles may be centred at the path. According to an embodiment of the invention, the circles may be centred at the orthogonal projection of the position of a transmitter unit onto a plane. Each circle may lie in this plane. According to an embodiment of the invention, the circles may be centred at the transmitter unit. Therefore, all locations on one circle may have the same spatial distance to the transmitter unit.

According to an embodiment of the invention, selecting the set of locations comprises: selecting locations in the proximity of a border of the room. A location may lie in the proximity of a border of the room, if the minimal spatial distance of a location to the border is smaller than 5%, for example 1%, as the maximal diameter of the room. In the proximity of a border of the room, the probability is high that radiation reflected by the border may be detected. Selecting locations in the proximity of the border may have the advantage that mainly multiple reflected radiation counts for the estimation of the probability distribution function of the shadowing component. It may be important to collect location at which multiple reflections are detected, since the path loss values detected there contribute to the parts of the probability distribution function not containing the peak of the probability distribution function.

According to an embodiment of the invention, selecting a set of locations comprises: setting a field of view for each location, wherein the path loss value determined for a location describes the path loss of the radiation detected by the receiver unit at the location with respect to the field of view.

Any change in the azimuth, elevation and field of view properties of the transmitter unit and the receiver unit may influence the channel characteristics of the wireless communication system. Also for these cases, communication scenarios may be evaluated.

The field of view at a location may be defined by inhomogeneous detecting characteristics or abilities of a receiver unit depending on the direction the radiation falls onto the receiver unit. The receiver unit may only detect the components of the irradiating rays falling within the field of view of the receiver unit. The field of view may also be defined by a cone looking in a certain direction with a certain aperture angle. The receiver unit then will detect all irradiating rays falling within the cone (or field of view) onto the receiver unit.

According to embodiments of the invention, the field of view for at least one location, most of the locations or each location is directed to the transmitter unit.

According to embodiments of the invention, the field of view of at least one location, most of the locations or each location is directed to a border of the room.

Also a field of view on the basis of a plurality of directions may be possible. This kind of field of view may be defined by a plurality of cones, each cone lookin in one of the directions.

According to embodiments of the inventions, the field of view of at least one location, most of the locations or each location is directed to multiple directions.

Important communication scenarios may be a line-of-sight (LOS) communication scenario, a non-line-of-sight (NLOS) communication scenario with single reflections and a non-line-of-sight communication scenario with multiple reflections.

According to an embodiment of the invention, the communication scenario may be a line-of-sight communication scenario, wherein a straight line from each receiver unit on the path to the transmitter unit may not intersect with a border of the room.

According to an embodiment of the invention, in a line-of-sight communication scenario, selecting the set of location comprises: selecting locations from circles centred at the path, wherein each circle is orthogonal to the straight line from the centre of the circle to the transmitter unit and the radius of the circle is determined such that the receiver locations are located in the proximity of the borders of the room, setting the field of view at each location in a direction to the transmitter unit.

Given a line-of-sight (LOS) transmission, there may be a direct path between the transmitter unit and the receiver unit. The variations of the path loss in the neighbourhood of the path define the shadowing process. To extract or estimate these variations, the following approach is proposed. Measurement points may be selected from circles (or portions of the circles) orthogonal to and centred at the path. The displacement between two neighbouring circles in the direction of the path may determine the resolution of the estimation with respect to the spatial distance away from the transmitter unit. Furthermore, only these points from the circles may be considered, which fall within the field of view (FOV) of the transmitter unit. The points or locations on each circle may have a direct line of sight (LOS) to the transmitter unit. The radius of the circles may be chosen in order to collect the receiver locations that are closest or in the vicinity to the borders or objects in a neighbourhood to the path and which experience the highest shadowing.

The neighbourhood of a path may be defined by the part of the room being contained in a volume, which is defined by all locations having a spatial distance from the path, which is smaller than a predetermined maximal distance. The predetermined maximal distance may be smaller than 20%, for example 10%, of the maximal diameter of the room.

According to an embodiment of the invention, the communication scenario may be a single reflection non-line-of-sight communication scenario, wherein the path may lie in proximity to a border of the room, wherein a straight line of each point of the path to the transmitter unit may not intersect with a border of the room. According to an embodiment of the invention, in a single reflection non-line-of-sight communication scenario, selecting the set of locations comprises: selecting locations from circles, wherein each circle defines the basis of a cone with the apex of the cone at the transmitter unit and the basis being substantially parallel to a border of the room, setting the field of view at each receiver location in a direction to the border of the room.

Given a single reflection non-line-of-sight (NLOS) transmission, which means that there is no direct path for rays between the transmitter unit and the receiver unit, a path close to the reflecting object or border can be defined.

The orientation of the field of view (FOV) of the measurement points or locations should be consistent with respect to the reflecting surface, border or object and the single reflection assumption. The direct special distance between the transmitter unit and the path defines the height of a family of geometrical cones. The basis of each cone and the path may lie in a plane, which may be substantially parallel to the border of the room. The measurement points or locations may be selected in this plane on circles or portions of circles, which are formed by the basis of each cone. The locations on each circle may be equidistant to the transmitter unit and may have nearly the same field of view (FOV) orientation with respect to the transmitter unit. The distance between the transmitter unit and the locations on each circle may be defined by the slant height of the respective cone.

According to an embodiment of the invention, the communication scenario may be a multiple reflection non-line-of-sight communication scenario, wherein the path may have a neighbourhood with a plurality of borders (reflecting surfaces).

According to an embodiment of the invention, in a multiple reflection non-line-of-sight communication scenario, selecting the set of locations comprises: selecting locations from spheres around the position of the transmitter unit, wherein the locations are located in the neighbourhood of the path, setting the field of view at each location to multiple directions, wherein each direction may be directed to a border of the plurality of borders.

Given a multiple reflection non-line-of-sight (NLOS) transmission, a linear path may be defined for which the shadowing can be estimated over the distance. In this case, the measurement points or locations may be selected on concentric spheres around the position of the transmitter unit. Furthermore, only the locations on the spheres may be counted which are located in a certain volume in the neighbourhood around the path. Because of the non-line-of-sight (NLOS) multipath nature of the communication scenario, a multiple directions field of view (FOV) orientation may have to be considered in all path loss value measurements or determinations and further may have to fit the particular application and use case of the communication system.

According to an embodiment of the invention, the path loss model may be a logarithmic distance path loss model.

According to an embodiment of the invention, the mean value curve is determined on the basis of a linear fit of points of the result set or a linear fit through the selected path loss values with respect to the path loss model. For example, for the logarithmic distance path loss model, the mean value curve may be the linear fit with respect to the logarithmic special distance.

According to an embodiment of the invention, the distance function may be determined on the basis of a minimal distance of a point of the result set to the mean value curve. The distribution function of the shadowing in this case can be calculated from the set of the shortest distances between the measurement points and the mean fitted curve.

Alternatively or additionally, the distance function may be determined in the following way: Each point of the result set has a path loss value and a spatial distance. The distance function may be the difference of the path loss value and the mean value at the spatial distance.

According to an embodiment of the invention, determining the path loss value for each location comprises: virtually designing the wireless communication system; calculating the path loss values with a simulation. The simulation may be a ray-tracing simulation. In particular, the simulation may be a Monte Carlo ray-tracing simulation.

According to an embodiment of the invention, virtually designing the wireless communication system comprises: virtually designing the room; virtually designing the transmitter unit; virtually designing the receiver unit.

According to an embodiment of the invention, virtually designing the transmitter unit comprises virtually designing the radiation characteristics of the transmitter unit or the field of view of the transmitter unit.

According to an embodiment of the invention, virtually designing the receiver unit comprises virtually designing the detection characteristic of the receiver unit or the field of view of the receiver unit.

According to an embodiment of the invention, determining the path loss value for each location comprises: arranging the transmitter unit inside the room in a real-time measurement setup; measuring the path loss values with the receiver unit. The receiver unit may be transported to each location from the set of locations. The transporting and the measuring may be conducted by a robot.

According to an embodiment of the invention, the wavelength of waves radiated or emitted by the transmitter unit may be small compared to the dimensions of the room. A wavelength may be small, if the wavelength is smaller than one million of the maximal diameter of the room.

According to an embodiment of the invention, the wireless communication system may be an infrared communication system, wherein the transmitter unit comprises an infrared transmitter, for example LEDs, wherein the receiver unit comprises an infrared receiver, for example a photodiode.

Infrared radiation may have a wavelength in the range of 1 $\mu$m. The wavelength of infrared radiation is small compared to the usual room of an office building or a cabin of a vehicle.

According to an embodiment of the invention, the room may be a cabin of a vehicle, for example an aeroplane.

The invention also relates to a computer-readable medium, in which a computer program for estimating a probability distribution function of the shadowing of a wireless communication system is stored, which, when being executed by a processor is adapted to carry out the method for estimating a probability distribution function.

A computer-readable medium may be a floppy disk, a hard disk, an USB (Universal Serial Bus) storage device, a RAM (Read Access Memory), a ROM (read only memory) and an EPROM (Erasable Programmable Read Only Memory). A computer readable medium may also be a data communication network, e.g. the Internet, which allows downloading a program code.

The invention further relates to a program element for estimating a probability distribution function of the shadowing of a wireless communication system, which, when being executed by a processor, is adapted to carry out the method for estimating a probability distribution function.

These and other aspects of the invention will be apparent from and elucidated with reference to the embodiments described hereinafter.

Brief description of the drawings

Below, embodiments of the present invention are described in more detail with reference to the attached drawings.

**Fig. 1** shows a flow diagram of a method for estimation of a probability distri- bution function according to an embodiment of the invention.

**Fig. 2a** shows a flow diagram for selecting a set of locations for a line-of-sight communication scenario according to an embodiment of the invention.

**Fig. 2b** shows a flow diagram for selecting a set of locations for a single reflec- tion non-line-of-sight communication scenario according to an embodi- ment of the invention.

**Fig. 2c** shows a flow diagram for selecting a set of locations for a multiple re- flection non-line-of-sight communication scenario according to an em- bodiment of the invention.

**Fig. 3** shows a schematic three-dimensional view of a receiver unit.

**Fig. 4** shows a schematic three-dimensional view of a transmitter unit.

**Fig. 5** shows a three-dimensional view of a virtually designed aircraft cabin.

**Fig. 6** shows a cross-section through the virtually designed aircraft cabin of Fig. 5.

**Fig. 7a** shows a two-dimensional result set for a communication scenario.

**Fig. 7b** shows probability distribution function obtained from the result set of Fig. 7a.

**Fig. 8** shows a three-dimensional view of a part of the room shown in Fig. 5.

**Fig. 9a** shows a two-dimensional result set obtained for a further communica- tion scenario.

**Fig. 9b** shows a probability distribution function obtained from the result set of Fig. 9a.

**Fig. 10** shows a three-dimensional view of a part of the room shown in Fig. 5.

**Fig. 11a** shows a two-dimensional result set obtained for a further communica- tion scenario.

**Fig. 11b** shows a probability distribution function obtained from the result set of Fig. 11a.

**Fig. 12a** shows a two-dimensional result set obtained for a further communica- tion scenario.

**Fig. 12b** shows a probability distribution function obtained from the result set of Fig. 12a.

**Fig. 13** shows an airplane with a cabin containing a wireless communication system.

Detailed description of embodiments

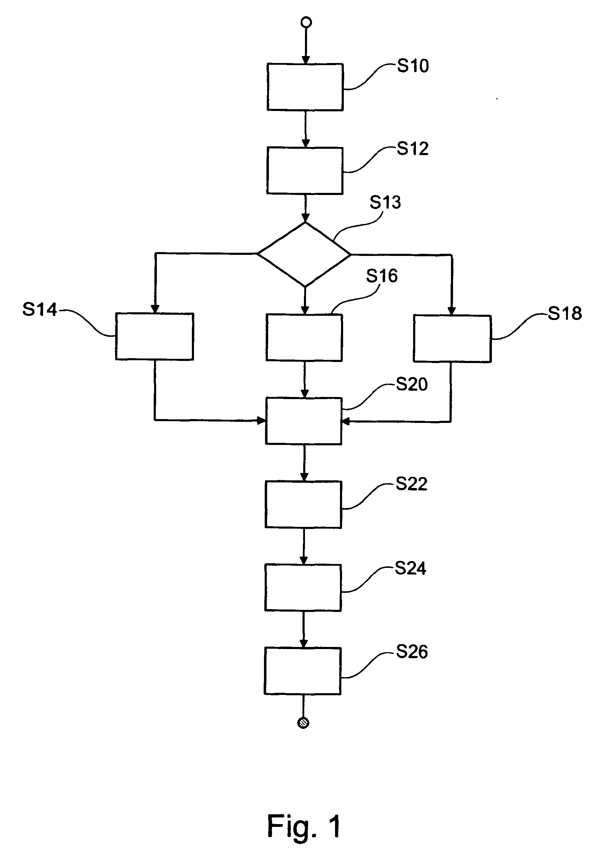

Fig. 1 shows a flow diagram of an embodiment of a method for estimation a probability distribution function of a shadowing of an optical wireless communication system.

In step S10, a measurement setup for an optical wireless communication system is chosen. The optical wireless communication system may be an infrared optical wireless communication system. The measurement setup may be a simulation or a demonstrator. In the case of a simulation the room of the communication system has to be virtually designed. Further transmitter units and receiver units have to be virtually designed. In the case of a demonstrator, a real existing room like an aircraft cabin, can be used or has to be constructed.

Further, the locations of the transmitter units inside the room have to be chosen.

In step S12, a path representing a communication scenario has to be defined. The path may be the positions of a receiver unit of a mobile device carried by a person transversing the room.

In step S13, based on the geometry of the room and the path, a communication scenario has to be chosen. In the present embodiment of the estimation method, three shadowing estimation communication scenarios may be chosen, which facilitate the description of most of the communication scenarios that can appear in a measurement setup.

Dependent on the chosen communication setup, a set of locations is selected.

In step S14, a set of locations for a line-of-sight communication scenario are selected.

In step S16, a set of locations for a single reflection non-line-of-sight communication scenario is selected.

In step S18, a set of locations for a multiple reflections non-line-of-sight communication scenario are selected.

It is also possible, that at least two communication scenarios are selected. In this case at least two of the steps S14, S16 and S18 will be conducted.

In step S20, a path loss value for each location from the set of locations selected in at least one of the steps S14, S16 and S18 is determined. For example, this can be done by collecting measured path loss values in a real measurement setup or by calculating the path loss values by a ray-tracing simulation in a virtual measurement setup.

In step S22, a two-dimensional result set is created. In the result set, the path loss values are plotted versus the distance of the respective location from the transmitter unit.

In step S24, a statistical path loss equation model is selected. On the basis of the path loss model a mean value curve for the result set is calculated. This may be done by calculating a regression, LSE of at least a part of the points of the result set.

In step S26, a probability distribution function is calculated from the result set. This may be done by calculating the probability distribution function from the shortest distances from the path loss values to the mean value curve.

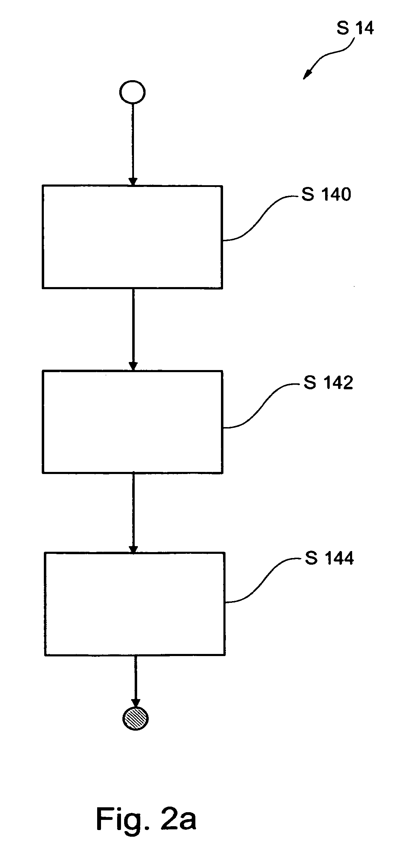

Fig. 2a shows a flow diagram of selecting locations for a line-of-sight communication scenario. The steps of Fig. 2a may be conducted in step S14 of Fig. 1.

In step S140, locations or measurement points are selected from circles or portions of circles orthogonal to and centred on the path within the field of view of the transmitter unit.

In step S142, the radius of the circles is chosen so that these locations are collected, which are closest to the borders or objects in proximity to the path and which may experience the highest shadowing.

In step S144, the field of view at each location is set in direction to the transmitter. Alternatively, a receiver unit with a field of view in multiple directions may be located at each location with a predefined orientation. Then, only these locations on each circle are counted, which have a receiver unit with a field of view orientation or direction towards the transmitter unit. In this case, the field of view at the location is set to the field of view direction of the receiver unit located at the location looking in the direction to the transmitter unit.

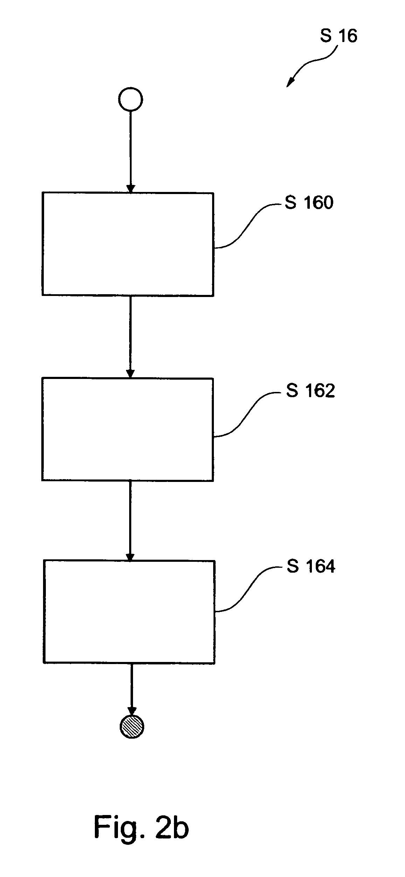

Fig. 2b shows a flow diagram for selecting a set of locations in the case of a single reflection non-line-of-sight communication scenario. The steps of Fig. 2b may be conducted during step S16 of Fig. 1.

In step S160, the family of cones defined by the direct distance between the transmitter unit and the path is identified. Further, the plane defined by the basis of each cone and the path is identified. The plane may be substantially parallel to a border of the room or an object inside the room.

In step S162, locations or measurement points are selected in this plane on circles or portions of the circles, which are formed by the basis of each cone.

In step S164, the field of view at each location is set in a direction towards the border. Alternatively, a receiver unit with a field of view in multiple directions may be located at each location with a predefined orientation. Then, only these locations on each circle are counted, which have a receiver unit with a field of view orientation or direction looking in the direction towards the reflecting border or object. In this case, the field of view at the location is set to the field of view direction of the receiver unit looking in the direction towards the reflecting border or object.

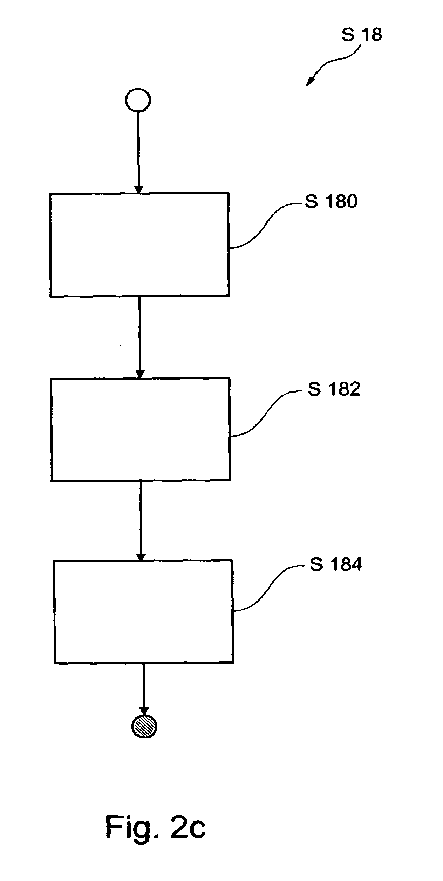

Fig. 2c shows a flow diagram for selecting locations in the case of a multiple reflections non-line-of-sight communication scenario. The steps of Fig. 2c may be conducted during step S18 of Fig. 1.

In step S180 the measurement points or locations are selected on concentric spheres around the position or location of the transmitter unit.

In step S182 only these locations on the spheres are counted, which are located in a certain volume in the neighbourhood around the path.

In step S184 the field of view at each location is set to multiple directions looking to the borders in the neighbourhood of the path. The field of view orientation of the measurement points or locations should be consistently considered on all circles and should fit the particular application and use case of the communication system and communication scenario.

In the following, the method for estimating a probability distribution function of a shadowing of an optical wireless communication system is applied on the signal distribution of an infrared optical system for aircrafts. The signal distribution is simulated using a Monte Carlo ray-tracing simulation approach.

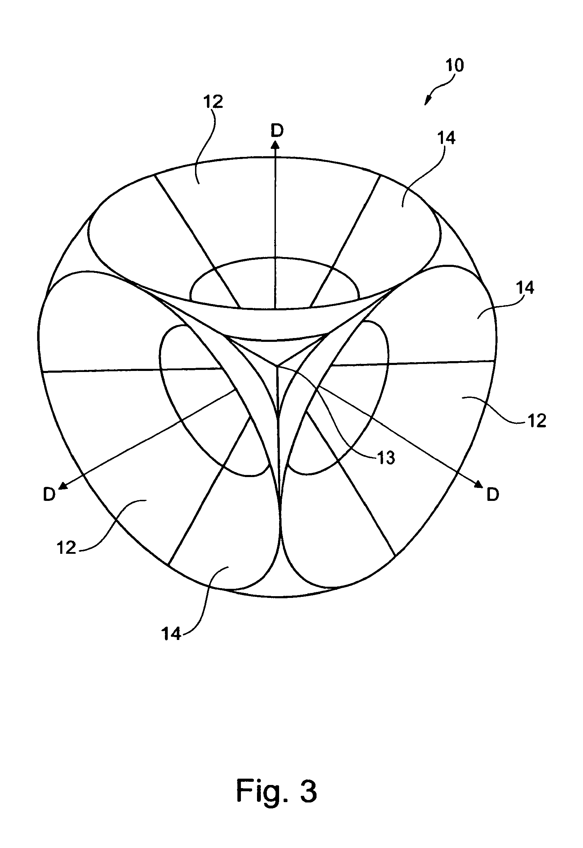

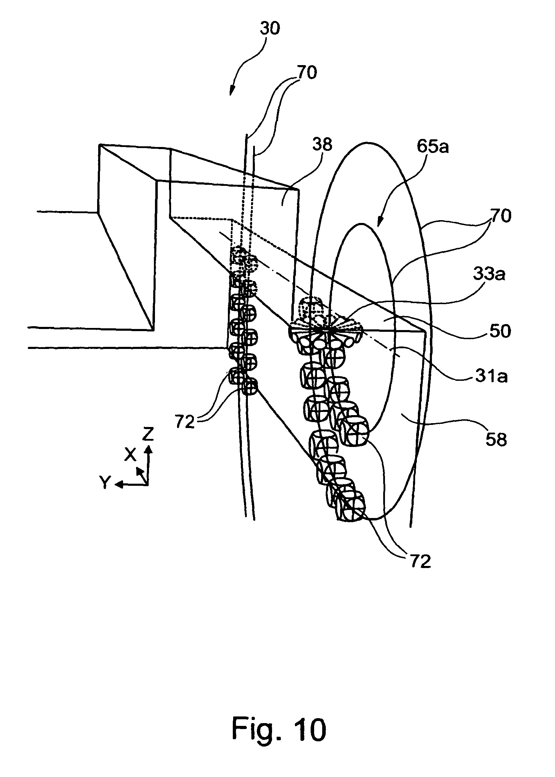

Fig. 3 shows a receiver unit 10 in a schematic way. Each receiver 12 of the receiver unit has a field of view of 90°. For example, six photo diodes (PDs) 12 are placed on the sides of a cube to form a receiver unit 10. If the receiver unit 10 is virtually designed, the PDs are simulated by receiver points which are placed on the size of an infinitesimal cube at the point 13. In Fig. 10 the field of view of each receiver is represented by a cone 14 with an aperture angle of 90°. The basis of each cone forms the side of the cube. The direction D of the field of view 14 of each receiver 12 is orthogonal to the directions D of the field of views 14 of the other receivers 12.

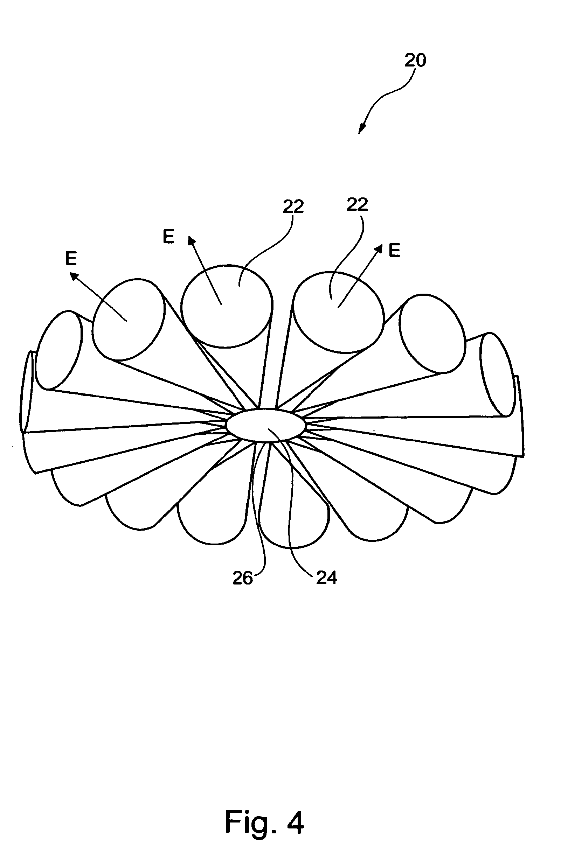

Fig. 4 shows a schematic view of a transmitter unit 20. The transmitter unit 20 consists of 16 transmitters 22, for example light emitting diodes (LEDs) 22, which are arranged around a circle 26, of for example 2cm diameter, centred at a point 24. Each transmitter 22 has a field of view of 20°, represented by a cone. The direction E of the field of view of the transmitters 22 of the transmitter unit 20 are all lying in a plane defined by the circle 26. With this arrangement of the transmitters 22, the transmitter unit 20 has an omni-directional radiation characteristic in the plane and is designed to provide a high power multipath signal component.

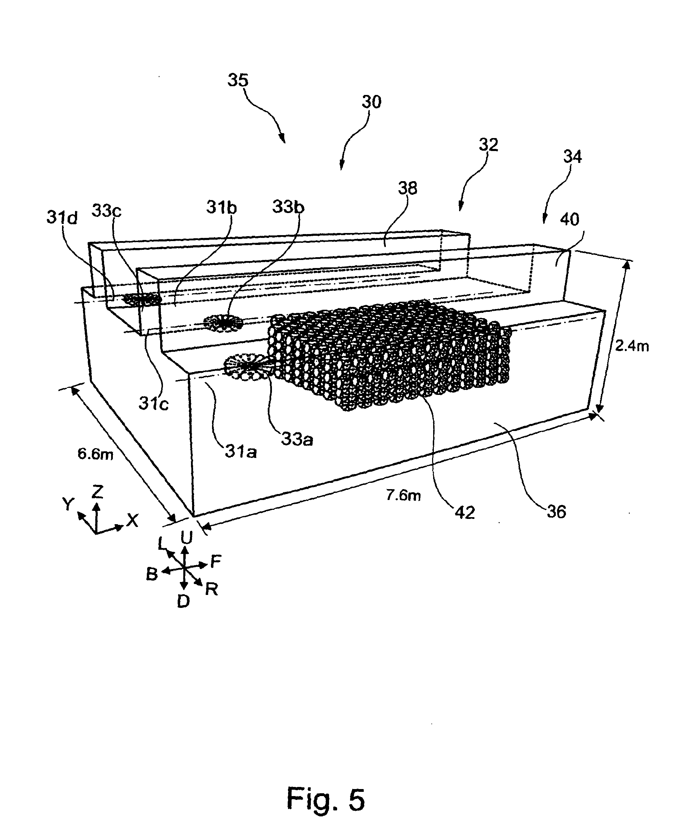

Fig. 5 shows a three-dimensional view of a virtually designed cabin 30 of an airplane. The cabin 30 has two corridors 32 and 34 with a height of 2,4 m. The cabin has a length of 7,6 m and is 6,6 m wide. The generalized model of the cabin 30 comprises a cuboid 36 which defines the main part of the cabin and two smaller cuboids 38 and 40 on top of the cuboid 36 which defines the upper part of the corridors 32 and 34.

In the lower part of the diagram arrows are shown, defining the orientation of the cabin 30 with respect to the airplane. Arrow B is showing in the back direction of the airplane, arrow F in the front direction. Further arrow D shows in the down direction, arrow U in the up direction, arrow L in the left direction and arrow R in the right direction.

Further, for the ray-tracing simulation a coordinate system is used with the origin at the point O. The arrows X, Z and Y define a coordinate system, wherein the arrow X is showing in the direction F, the arrow Z is showing in the direction U and the arrow Y is showing in the direction L, which are orthogonal to each other.

Inside the cabin 30 four paths 31a, 31 b, 31 c and 31 d have been selected. Paths 31a to 31d are all straight lines parallel to the X direction, running from the front to the back of the airplane or the cabin.

With respect to the coordinate system, the path 31 a is defined by y=0,18059m, z=1,7464m; the path 31b by y=1,9865m, z=2,0552m; the path 31c by y=3,2671m, z=1,7226m and the path 31d by y=5,9596m, z=1,7464m.

Further, three transmitters 33a, 33b and 33c are located inside the cabin 30. A communication system 35 may comprise the cabin 30 and at least one of the transmitters 33a, 33b and 33c. For each of the paths 31 a to 31 d only one of the transmitters 33a, 33b and 33c will be selected for the ray-tracing simulation. From a location of a transmitter unit 33a, 33b and 33c, rays will be traced to the respective receiver unit. Eventually, the rays have been reflected and have eventually thereby been attenuated by the borders of the cabin 30. The emitting power of the rays will depend on the emitting characteristics of the respective transmitter unit 33a, 33b and 33c.

The transmitter unit 33a is located at x=0,54824m, y=0,57461m, z=1,7464m; the transmitter unit 33b at x=1,3423m, y=3,2671m, z=1,7226m; the transmitter unit 33c at x=0,54824m, y=5,9596m, z=1,7464m.

The transmitter units 33a, 33b and 33c may be designed like the transmitter unit shown in Fig. 4. The receiver units of the array 42 may be designed like the receiver unit shown in Fig. 3.

Further, inside the cabin 30 possible locations of receiver units are located by a receiver array 42. inside the room 30, with the help of equidistantly separated irradiance observer planes a three-dimensional array of 200 x 200 x 100 receiver units is defined. The receiver units may be separated by each other by approximately 3 cm in horizontal and vertical directions. In Fig. 5 only a part of the cuboid array 42 of receivers is shown.

In a simulation, the path loss values of each receiver unit of the array 42 may be calculated by ray-tracing. After that, the path loss values at the selected locations with the selected field of view may be used to calculate the probability distribution function. Alternatively, it is also possible to first select the locations and the field of view of the specific communication scenario and then calculate the path loss values with a simulation.

In a real-time measurement setup, only measurements have to be made at locations and directions that have been selected for the specific communication scenario. In this way, the number of measurement points can be reduced according to the specific shadowing estimation scenario.

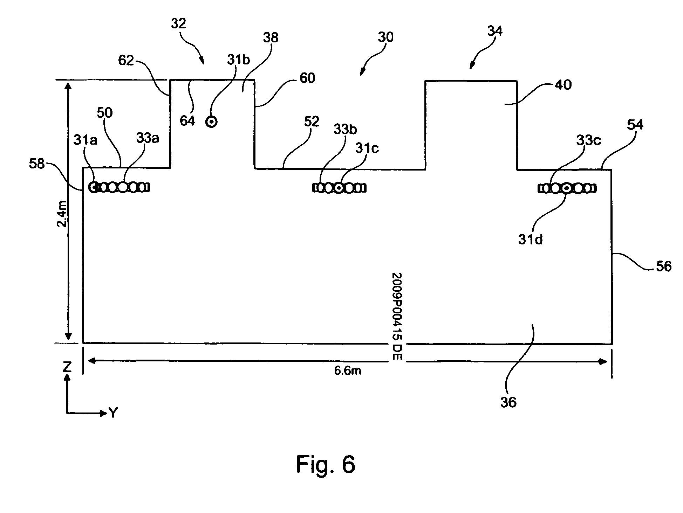

Fig. 6 shows a cross-section through the cabin 30 orthogonal to the X-direction.

The transmitters 33a, 33b and 33c are arranged below borders or ceilings 50, 52 and 54, respectively. The transmitter unit 33b is arranged in the middle of the cabin 30, the transmitters 33a and 33c are arranged at the sides of the cabin in the vicinity of the borders or sidewalls 56 and 58. The paths 31a to 31d have been chosen not to focus the simulation only on line —of-sight (LOS) rays emitted by the transmitters 33a to 33c, but also on non-line-of-sight (NLOS) rays for estimation of the probability distribution functions for each of the paths 31 a to 31d. In a real-time communication setup, it is expected to encounter line-of-sight (LOS) paths and non-line-of-sight (NLOS) paths with short range single reflections or non-line-of-sight (NLOS) paths with long-range multiple reflections due to obstructions. The paths 31a to 31d have been chosen such that these scenarios are covered.

Path 31 c represents a line-of-sight communication scenario which is enhanced by a single reflection component coming from the ceiling 52 in proximity. In the communication scenario for path 31c only the transmitter unit 33b is used.

The path 31d represents a line-of-sight communication scenario which collects beside first reflections from the ceiling 54 further second single reflection components coming from the sidewall 56. In the communication scenario for path 31d only the transmitter unit 33c is used for the calculation of the rays.

The path 31a represents a non-line-of-sight communication scenario due to azimuthal misalignment between the transmitter unit 33c and a receiver unit on the path 31 a. A receiver unit on the path 31 a further collects short range single reflections with multipath components coming from the sidewall 58 and single reflections coming from the ceiling 50. In the communication scenario for path 31 a only the transmitter 33a is used.

The path 31 b represents a multiple reflections non-line-of-sight scenario, with reflections coming from the borders 60, 62 and 66 of the cabin 30. The borders 60, 62 and 64 limit the cuboid 38 in the left, the right and the up direction. A communication scenario associated with path 31 b allows for the investigation of path loss due to misalignment between transmitter and receiver in elevation, longer range multiple reflections and obstruction. In the communication scenario for path 31 b only the transmitter 33a is used.

For the calculation of two-dimensional results sets and probability distribution functions the statistical path loss model for radio frequency communications is assumed to describe the optical signal propagation. It is given as follows:

$$\overline{PL(d[m])}[dB] = \overline{PL(d_0)} + 10n \, \log_{10}\left(\frac{d}{d_0}\right) + X_\sigma$$

The statistical path loss $PL$ at a distance $d$ in metres, wherein the statistical path loss is measured in decibel dB, is an average path loss at a distance $d_0$ plus the logarithm of the quotient of d with $d_0$, multiplied by $10n$, wherein $n$ is the path loss exponent. $d$ is the spatial distance between the transmitter unit and the receiver unit. Further, the statistical path loss $PL$ comprises an $X_\sigma$ random variable representing the shadowing component.

With the presented method the probability distribution function of the $X_\sigma$ random variable can be estimated.

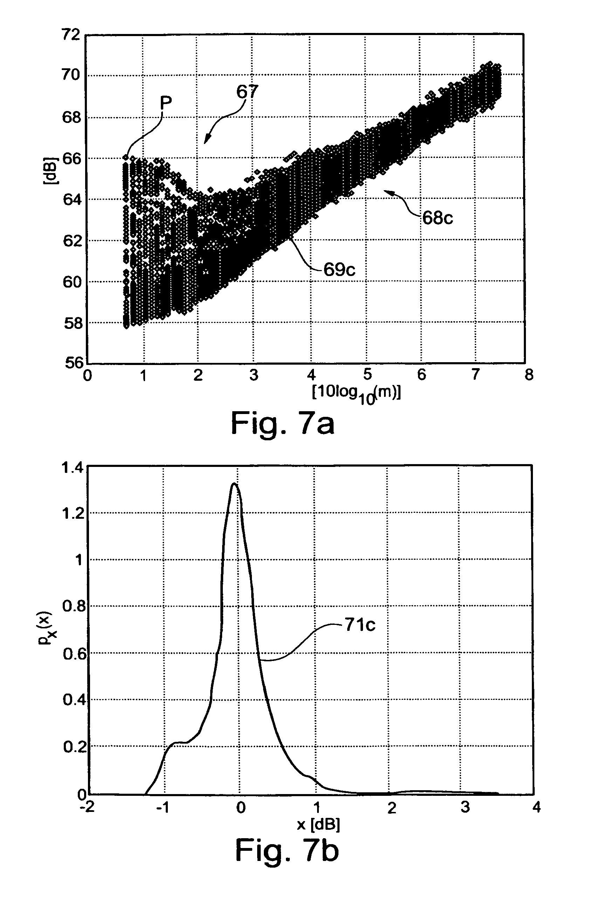

From the model, it is expected, that the shadowing component represented by the $X_\sigma$ random variable is a Gaussian distribution around a linear regression mean curve over the logarithmic distance. The calculated probability distribution functions 71 a, 71 b, 72c and 71d, shown in Fig. 7b, 9b, 11b and 12b, respectively, all resemble a Gaussian distribution.

The shadowing components and the probability distribution functions 71c and 71d along path 31c and along path 31d, respectively, have been estimated according to the line-of-sight shadowing estimation communication scenario.

Fig. 7a shows a two-dimensional result set 68c calculated from path loss values at locations in the vicinity of the path 31c. To obtain the result set 68c 12.546 points have been calculated. The field of view of each receiver unit at each location has been set to the backward direction. In the line-of-sight communication scenario associated with the path 31 c, only the transmitter unit 33b has been used.

According to the logarithmic pass loss model, the first dimension (abscissa) of the points of the result set 86c is the logarithmic distance from the transmitter unit 33b shown in Figs. 5 and 6. The second dimensions (ordinate) of the points of the diagram are the path loss values in dB. For example, point P has a logarithmic distance of about 0,75 and a path loss value of about 66 dB.

The standard deviation of the points of the result set 68c is 0,56769. The mean value curve 69c represents the linear fit of the points of the result set 68c which has been calculated with respect to the points of the results set 68c between a linear distance from 1,2m to 5,6m.

Fig. 7b shows a probability distribution function 71c calculated from the result set 68c of Fig. 7a. The first dimension of the diagram is the deviation of the mean value path loss, the second dimension is the probability of the respective deviation. The probability distribution function 71c has not been normalized.

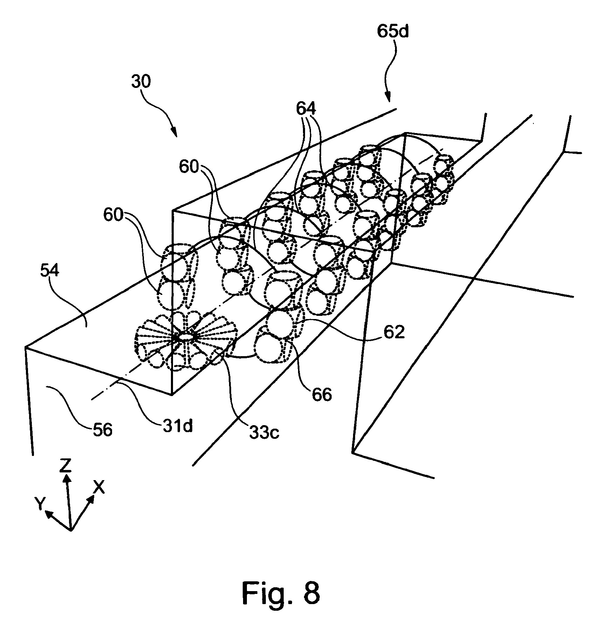

Fig. 8 shows a three-dimensional view of a part of the room 30 containing the path 31d and the transmitter 33c. For selecting the locations for determining path loss values, circles 64 with a radius of 0,6 m around the path 31d have been chosen. The circles 64 are centred at the path 31d and are equidistant. The radius of the circles 64 has been chosen in order to collect the locations which are closest to the sidewall 56 and may experience the highest shadowing. For example, the locations 60 are in the vicinity of the sidewall 56. Only the signals arriving at the receivers in the direction "back" are counted. The field of view for calculating the path loss is set to the backward direction. For example, only the receiver 66 of the receiver unit 62 is used to determine the path loss value at the location 62. In the configuration shown in Fig. 8, a line-of-sight signal component is received at distances from the transmitter unit 33a greater than 1 m. The first of the circles 64 has a distance from the receiver unit 33a about 1 m.

Fig. 8 shows only some of the locations of the set of locations 65d selected in the vicinity of the path 31d.

For consistency reasons, circles with the same distances and same radius but only centred to the path 31 c have been used for the communication scenario associated with the path 31c for determining the path loss values, resulting in the two-dimensional result set 68c shown in Fig. 7a and the probability distribution function 71c shown in Fig. 7b.

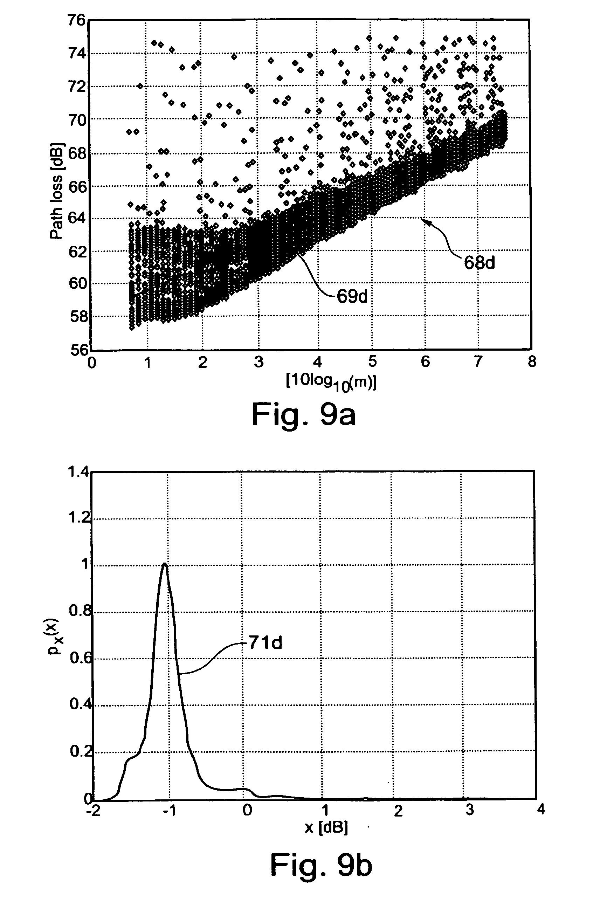

Fig. 9a shows a two-dimensional result set 68d obtained for the path 31d. The diagram of Fig. 9 has the same dimensions like the diagram of Fig. 7a. The points of the result set 68d have a standard deviation of 0,81262. The linear fit or mean value curve 69d has been calculated from the points of the result set 68d with a linear distance between 1,2m and 5,6m. For calculating the result set 68d, 7.903 points have been determined.

Fig. 9b shows the probability distribution function 71d calculated from the two-dimensional result set 68d shown in Fig. 9a. Again, the probability distribution function 71d has not been normalized.

Fig. 10 shows a three-dimensional view of a part of the cabin 30 containing the path 31 a and the transmitter unit 33a. In the communication scenario associated with path 31 a, only the transmitter 33a is used. Shadowing components along path 31a are estimated according to the single reflection non-line-of-sight shadowing estimation communication scenario. The locations 72 for determining the path loss values are located on concentric circles 70, which are parallel to the sidewall 58. The concentric circles are centred around the projected position of the transmitter unit 33a onto the plane parallel to the sidewall 58 and containing the path 31a. The field of view at each location 72 is directed to the sidewall 58. Only signals reflected by the sidewall 58 coming from the "right" direction are counted for calculating the path loss values.

Fig. 10 shows only some of the locations of the set of locations 65a selected in the vicinity of the path 31 a.

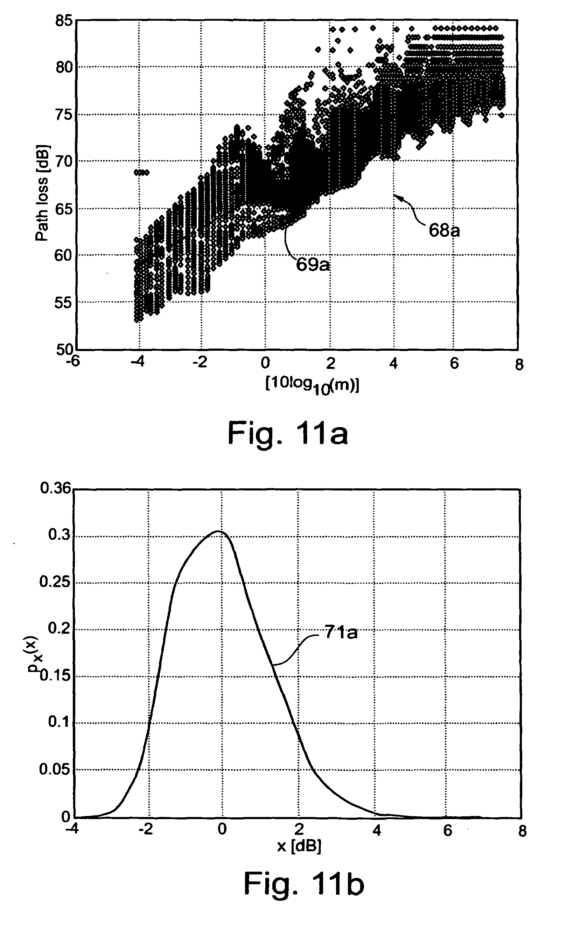

Fig. 11 a shows a two-dimensional result set 68a similar to those of Fig. 7a and Fig. 9a. The points of Fig. 11a have a standard deviation of 1,2728. The linear fit or mean value curve 69a has been calculated from the points of the result set 68a with a linear distance between 0,4m and 5,61 m. Fig. 11b shows the probability distribution function 71 a calculated from the result set 68a. The diagram of Fig. 11b corresponds to the diagrams of Fig. 7b and Fig. 9b.

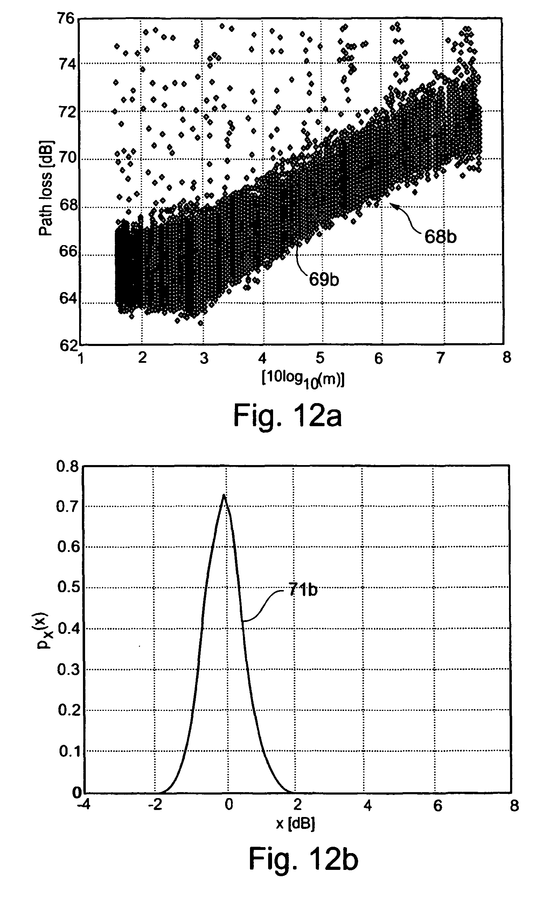

Fig. 12a shows a two-dimensional result set 68b obtained for the path 31 b. Again, the diagram is similar to those of Fig. 7a, 9a and 11a. Shadowing components along path 31 b have been estimated according to the multiple reflections non-line of sight shadowing estimation communication scenario. Only the transmitter unit 33a has been used for the communication scenario. The locations for determining the path loss values are located on concentric spheres around the position of the transmitter unit 33a. Furthermore, only those locations on the spheres are counted, which are located in the small cuboid volume 38 in the neighbourhood of path 31 b. The field of view at each location is set to multiple directions "back", "front", "left" and "right".

The points in Fig. 12a have a standard deviation of 0,69539. The linear fit or mean value curve 89b in Fig. 12a has been calculated from the points of the result set 68b with a linear distance between 1,45m to 5,78m.

Fig. 12b, similar to Figs. 7b, 9b and 11b, shows the probability distribution function 71 b calculated from the two-dimensional result set 68b.

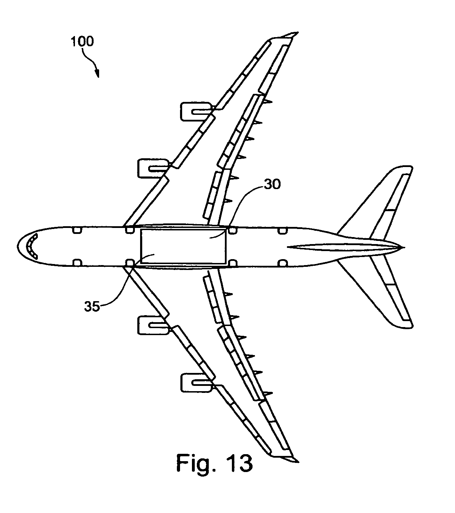

Fig. 13 shows a cabin 30 of an airplane 100 with a wireless communication system 35 for which the previously described communication scenarios have been estimated. The cabin 30 may have nearly the geometry as shown in Fig. 5.

The development of a complete path loss model for a room involves the extraction and estimation of the shadowing component, produced by the multiple objects in the setup of the room. A method for modeling of the path loss scattering due to shadowing effects is presented.

The method allows to present a graphical representation of a probability distribution function that describes the shadowing random process. To this end, measurement sets of path loss values determine the path loss scatterings in different communication scenarios. The needed probability distribution function is calculated for the particular path loss scattering. The presented method describes a proper and consistent way to select the locations of the path loss measurement points in the geometry of the setup in line of sight (LOS) and non-line-of-sight (NLOS) scenarios. The measurements can be either conducted by a simulation (Monte Carlo ray-tracing irradiation simulation) or by measurements with the optical communication hardware (transmitter device and receiver device).

Having the probability distribution functions for different communication scenarios of the shadowing, it is possible to quantify the variation of the path loss due to the shadowing effects. This may complete the statistical description of the path loss in a communication setup and may help the implementation of an infrared wireless system. The exact position of the transmitters and receivers may be determined according to the path loss model since it is a function of distance.

The obtained probability distribution function and the path loss model derived therewith may facilitate the design of the radiation and reception properties of the transmitter units and receiver units. For example, in the case of a infrared communication system, the LED transmit power and the number and formation of LEDs in a transmitter unit, the photodiode sensitivity area and the number and formation of photodiodes in a receiver unit and the link budget may be optimized. Further, the design of the cellular structure and frequency reuse factor may be optimized, the signal-to-interference ratio (SIR) distribution (maps) in the communication network may be calculated, and the development of handover algorithms may be facilitated.

While the invention has been illustrated and described in detail in the drawings and foregoing description, such illustration and description are to be considered illustrative or exemplary and not restrictive; the invention is not limited to the disclosed embodiment. Other variations to the disclosed embodiment can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

**Claims**

1.  Method for estimation of a probability distribution function (71 a, 71 b, 71 c, 71 d) of shadowing in a wireless communication system (35),
    wherein the wireless communication system (35) comprises a room (30) having a predefined geometry and a transmitter unit (33a, 33b, 33c) inside the room;
    the method comprising the steps of:

    selecting a path (31 a, 31 b, 31 c, 31d) inside the room (30) along which a receiver unit can be positioned;
    selecting a set of locations (65a, 65d) within a part of the room on the basis of the geometry of the room and the path;
    determining a path loss value for each location of the set of locations, wherein the path loss value describes the path loss of the radiation detected by the receiver unit at the location;
    calculating a two dimensional result set (68a, 68b, 68c, 68d) comprising points having a first dimension and a second dimension, wherein the first dimension of a point is the spatial distance of a location of the set of locations to the transmitter unit and the second dimension is the path loss value at the respective location;
    selecting a path loss model;
    calculating a mean value curve (69a, 69b, 69c, 69d) for the result set on the basis of the path loss model;
    calculating the shape of the probability distribution function (71 a, 71 b, 71 c, 71 d) from the result set, wherein a distance of a point of the result set to a mean value of the mean value curve is determined by a distance function.

2.  Method according to claim 1,
    wherein selecting the set of locations comprises:

    selecting a set of spheres, each sphere having a predefined radius and centred at the transmitter unit (33a, 33b, 33c);
    selecting locations (60, 62, 72) on the spheres, thereby generating the set of locations (65a, 65d).

3.  Method according to claim 1 or 2,
    wherein selecting the set of locations comprises:

    selecting a number of circles (64, 70), wherein each circle is orthogonal to a straight line from the centre of the circle to the transmitter unit (33c);
    selecting locations (60, 62, 72) on the circles, thereby generating the set of locations (65a, 65d).

4.  Method according to one of the preceding claims,
    wherein selecting the set of locations comprises:

    selecting locations (60, 72) in the proximity of a border (54, 58) of the room (30).

**5.** Method according to one of the preceding claims,
wherein selecting a set of locations comprises:

setting a field of view (66) for each location;

wherein the path loss value determined for a location describes the path loss of the radiation detected by the receiver unit at the location with respect to the field of view.

**6.** Method according to claim 5,
wherein the field of view (66) for at least one location is directed to the transmitter unit.

**7.** Method according to claim 5 or 6,
wherein the field of view of at least one location is directed to a border (58) of the room.

**8.** Method according to one of the claims 5 to 7,
wherein the field of view of at least one location is directed to multiple directions.

**9.** Method according to one of the preceding claims,
wherein the distance function is determined on the basis of a minimal distance of a point of the result set (68a, 68b, 68c, 68d) to the mean value curve (69a, 69b, 69c, 69d).

**10.** Method according to one of the preceding claims,
wherein determining the path loss value for each location comprises:

virtually designing the wireless communication system (35);
calculating the path loss values with a simulation.

**11.** Method according to one of the preceding claims,
wherein determining the path loss value for each location comprises:

arranging the transmitter unit (33a, 33b, 33c, 20) inside the room (30);
measuring the path loss values with the receiver unit (10).

**12.** Method according to one of the preceding claims,
wherein the wireless communication system is a infrared communication system (35),
wherein the transmitter unit (20) comprises an infrared transmitter (22);
wherein the receiver unit (10) comprises an infrared receiver (12).

**13.** Method according to one of the preceding claims,
wherein the room is a cabin of a vehicle (100).

**14.** A computer-readable medium, in which a computer program for estimating a probability distribution function of the shadowing of a wireless communication system is stored, which, when being executed by a processor, is adapted to carry out the method of one of the claims 1 to 13.

**15.** A program element for estimating a probability distribution function of the shadowing of a wireless communication system, which, when being executed by a processor, is adapted to carry out the method of one of the claims 1 to 13.

**Patentansprüche**

**1.** Verfahren zur Schätzung einer Wahrscheinlichkeitsverteilungsfunktion (71a, 71b, 71c, 71d) der Abschattung in einem drahtlosen Kommunikationssystem (35);
wobei das drahtlose Kommunikationssystem (35) einen Raum (30) mit einer vordefinierten Geometrie und eine Sendereinheit (33a, 33b, 33c) in dem Raum aufweist; wobei das Verfahren die folgenden Schritte umfasst:

Auswählen eines Pfads (31a, 31b, 31c, 31d) in dem Raum (30), entlang dem eine Empfängereinheit positioniert werden kann;

Auswählen einer Menge von Orten (65a, 65d) in einem Teil des Raums auf der Basis der Geometrie des Raums und des Pfads;

Bestimmen eines Pfadverlustwerts für jeden Ort der Menge von Orten, wobei der Pfadverlustwert die Pfadverluste der durch die Empfängereinheit an dem Ort detektierten Strahlung beschreibt;

Berechnen einer zweidimensionalen Ergebnismenge (68a, 68b, 68c, 68d), die Punkte umfasst, die eine erste Dimension und eine zweite Dimension aufweisen, wobei die erste Dimension eines Punkts die räumliche Distanz eines Orts der Menge von Orten zu der Sendereinheit und die zweite Dimension der Pfadverlustwert an dem jeweiligen Ort ist;

Auswählen eines Pfadverlustmodells;

Berechnen einer Mittelwertkurve (69a, 69b, 69c, 69d) für die Ergebnismenge auf der Basis des Pfadverlustmodells;

Berechnen der Form der Wahrscheinlichkeitsverteilungsfunktion (71a, 71b, 71c, 71d) aus der Ergebnismenge, wobei eine Distanz eines Punkts der Ergebnismenge zu einem Mittelwert der Mittelwertkurve durch eine Distanzfunktion bestimmt wird.

**2.** Verfahren nach Anspruch 1,
wobei das Auswählen der Menge von Orten Folgendes umfasst:

Auswählen einer Menge von Sphären, wobei jede Sphäre einen vordefinierten Radius aufweist und an der Sendereinheit (33a, 33b, 33c) zentriert ist;
Auswählen von Orten (60, 62, 72) auf den Sphären, um **dadurch** die Menge von Orten (65a, 65d) zu erzeugen.

**3.** Verfahren nach Anspruch 1 oder 2,
wobei das Auswählen der Menge von Orten Folgendes umfasst:

Auswählen einer Anzahl von Kreisen (64, 70), wobei jeder Kreis zu einer geraden Linie von der Mitte des Kreises zu der Sendereinheit (33c) orthogonal ist;
Auswählen von Orten (60, 62, 72) auf den Kreisen, um **dadurch** die Menge von Orten (65a, 65d) zu erzeugen.

**4.** Verfahren nach einem der vorhergehenden Ansprüche,
wobei das Auswählen der Menge von Orten Folgendes umfasst:

Auswählen von Orten (60, 72) in der Nähe einer Grenze (54, 58) des Raums (30).

**5.** Verfahren nach einem der vorhergehenden Ansprüche,
wobei das Auswählen einer Menge von Orten Folgendes umfasst:

Setzen eines Blickfeldes (66) für jeden Ort;
wobei der für einen Ort bestimmte Pfadverlustwert die Pfadverluste der durch die Empfängereinheit an dem Ort mit Bezug auf das Blickfeld detektierten Strahlung beschreibt.

**6.** Verfahren nach Anspruch 5,
wobei das Blickfeld (66) für mindestens einen Ort auf die Sendereinheit gerichtet ist.

**7.** Verfahren nach Anspruch 5 oder 6,
wobei das Blickfeld mindestens eines Orts auf eine Grenze (58) des Raums gerichtet ist.

**8.** Verfahren nach einem der Ansprüche 5 bis 7,
wobei das Blickfeld von mindestens einem Ort auf mehrere Richtungen gerichtet ist.

**9.** Verfahren nach einem der vorhergehenden Ansprüche,
wobei die Distanzfunktion auf der Basis einer minimalen Distanz eines Punkts der Ergebnismenge (68a, 68b, 68c, 68d) zu der Mittelwertkurve (69a, 69b, 69c, 69d) bestimmt wird.

**10.** Verfahren nach einem der vorhergehenden Ansprüche,
wobei das Bestimmen des Pfadverlustwerts für jeden Ort Folgendes umfasst:

virtuelles Entwerfen des drahtlosen Kommunikationssystems (35);

Berechnen der Pfadverlustwerte mit einer Simulation.

**11.** Verfahren nach einem der vorhergehenden Ansprüche,
wobei das Bestimmen des Pfadverlustwerts für jeden Ort Folgendes umfasst:

Anordnen der Sendereinheit (33a, 33b, 33c, 20) in dem Raum (30);
Messen der Pfadverlustwerte mit der Empfängereinheit (10).

**12.** Verfahren nach einem der vorhergehenden Ansprüche,
wobei das drahtlose Kommunikationssystem ein Infrarot-Kommunikationssystem (35) ist,
wobei die Sendereinheit (20) einen Infrarotsender (22) umfasst;
wobei die Empfängereinheit (10) einen Infrarotempfänger (12) umfasst.

**13.** Verfahren nach einem der vorhergehenden Ansprüche,
wobei der Raum eine Kabine eines Fahrzeugs (100) ist.

**14.** Computerlesbares Medium, in dem ein Computerprogramm zur Schätzung einer Wahrscheinlichkeitsverteilungsfunktion der Abschattung eines drahtlosen Kommunikationssystems gespeichert ist, das, wenn es durch einen
Prozessor ausgeführt wird, dafür ausgelegt ist, das Verfahren nach einem der Ansprüche 1 bis 13 auszuführen.

**15.** Programmelement zur Schätzung einer Wahrscheinlichkeitsverteilungsfunktion der Abschattung eines drahtlosen
Kommunikationssystems, das, wenn es durch einen Prozessor ausgeführt wird, dafür ausgelegt ist, das Verfahren
nach einem der Ansprüche 1 bis 13 auszuführen.

**Revendications**

**1.** Procédé d'estimation d'une fonction de répartition (71a, 71b, 71c, 71d) de l'occultation dans un système de communication sans fil (35),
le système de communication sans fil (35) comprenant une pièce (30) possédant une géométrie prédéfinie et un
module émetteur (33a, 33b, 33c) à l'intérieur de la pièce ;
le procédé comprenant les étapes consistant à :

sélectionner un chemin (31a, 31b, 31c, 31d) à l'intérieur de la pièce (30) suivant lequel un module récepteur
peut être placé ;
sélectionner un ensemble d'emplacements (65a, 65d) à l'intérieur d'une partie de la pièce en fonction de la
géométrie de la pièce et du chemin ;
établir une valeur d'affaiblissement sur le chemin pour chaque emplacement de l'ensemble d'emplacements,
la valeur d'affaiblissement sur le chemin décrivant l'affaiblissement sur le chemin du rayonnement détecté par
le module récepteur à l'emplacement ;
calculer un ensemble de résultats à deux dimensions (68a, 68b, 68c, 68d) comprenant des points possédant
une première dimension et une deuxième dimension, la première dimension d'un point étant la distance spatiale
d'un emplacement de l'ensemble d'emplacements par rapport au module émetteur et la deuxième dimension
étant la valeur d'affaiblissement sur le chemin à l'emplacement respectif ;
sélectionner un modèle d'affaiblissement sur le chemin ;
calculer une courbe de valeurs moyennes (69a, 69b, 69c, 69d) pour l'ensemble de résultats compte tenu du
modèle d'affaiblissement sur le chemin ;
calculer la forme de la fonction de répartition (71a, 71b, 71c, 71d) à partir de l'ensemble de résultats, une
distance d'un point de l'ensemble de résultats par rapport à une valeur moyenne de la courbe de valeurs
moyennes étant établie par une fonction distance.

**2.** Procédé selon la revendication 1,
l'étape consistant à sélectionner l'ensemble d'emplacements comprenant les étapes consistant à :

sélectionner un ensemble de sphères, chaque sphère possédant un rayon prédéfini et étant centrée sur le
module émetteur (33a, 33b, 33c) ;
sélectionner des emplacements (60, 62, 72) sur les sphères, de manière à générer l'ensemble d'emplacements
(65a, 65d).

**3.** Procédé selon la revendication 1 ou 2,
l'étape consistant à sélectionner l'ensemble d'emplacements comprenant les étapes consistant à :

sélectionner un certain nombre de cercles (64, 70), chaque cercle étant orthogonal à une ligne droite allant du centre du cercle au module émetteur (33c) ;
sélectionner des emplacements (60, 62, 72) sur les cercles, de manière à générer l'ensemble d'emplacements (65a, 65d).

**4.** Procédé selon l'une des revendications précédentes,
l'étape consistant à sélectionner l'ensemble d'emplacements comprenant l'étape consistant à :

sélectionner des emplacements (60, 72) à proximité d'un bord (54, 58) de la pièce (30).

**5.** Procédé selon l'une des revendications précédentes,
l'étape consistant à sélectionner l'ensemble d'emplacements comprenant l'étape consistant à :

fixer un champ de vision (66) pour chaque emplacement ;
la valeur d'affaiblissement sur le chemin établie pour un emplacement décrivant l'affaiblissement sur le chemin du rayonnement détecté par le module récepteur à l'emplacement par rapport au champ de vision.

**6.** Procédé selon la revendication 5,
le champ de vision (66) pour au moins un emplacement étant orienté vers le module émetteur.

**7.** Procédé selon la revendication 5 ou 6,
le champ de vision d'au moins un emplacement étant orienté vers un bord (58) de la pièce.

**8.** Procédé selon l'une des revendications 5 à 7,
le champ de vision d'au moins un emplacement étant orienté dans plusieurs directions.

**9.** Procédé selon l'une des revendications précédentes,
la fonction distance étant établie en fonction d'une distance minimale d'un point de l'ensemble de résultats (68a, 68b, 68c, 68d) par rapport à la courbe de valeurs moyennes (69a, 69b, 69c, 69d).

**10.** Procédé selon l'une des revendications précédentes,
l'étape consistant à établir la valeur d'affaiblissement sur le chemin pour chaque emplacement comprenant les étapes consistant à :

concevoir virtuellement le système de communication sans fil (35) ;
calculer les valeurs d'affaiblissement sur le chemin à l'aide d'une simulation.

**11.** Procédé selon l'une des revendications précédentes,
l'étape consistant à établir la valeur d'affaiblissement sur le chemin pour chaque emplacement comprenant les étapes consistant à :

placer le module émetteur (33a, 33b, 33c, 20) à l'intérieur de la pièce (30) ;
mesurer les valeurs d'affaiblissement sur le chemin à l'aide du module récepteur (10).

**12.** Procédé selon l'une des revendications précédentes,
le système de communication sans fil étant un système de communication infrarouge (35),
le module émetteur (20) comprenant un émetteur infrarouge (22) ;
le module récepteur (10) comprenant un récepteur infrarouge (12).

**13.** Procédé selon l'une des revendications précédentes,
la pièce étant un habitacle d'un véhicule (100).

**14.** Support exploitable par ordinateur, dans lequel est enregistré un programme d'ordinateur permettant d'estimer une fonction de répartition de l'occultation d'un système de communication sans fil, qui est conçu, une fois exécuté par un processeur, pour mettre en oeuvre le procédé selon l'une des revendications 1 à 13.

15. Élément de programme permettant d'estimer une fonction de répartition de l'occultation d'un système de communication sans fil, qui est conçu, une fois exécuté par un processeur, pour mettre en oeuvre le procédé selon l'une des revendications 1 à 13.

Fig. 1

S 14

S 140

S 142

S 144

Fig. 2a

Fig. 2b

Fig. 2c

Fig. 3

Fig. 4

Fig. 5

Fig. 6

Fig. 7a

Fig. 7b

Fig. 8

Fig. 9a

Fig. 9b

Fig. 10

Fig. 11a

Fig. 11b

Fig. 12a

Fig. 12b

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **Moraitis.** Propagation Measurement inside Different Civil Aircrafts and Comparison with EM Techniques. *3rd European Conference on Antennas and Propagation 2009,* 2009, 887-891

- **Schmidt.** UWB Propagation Channels within an Aircraft and an Official Building Environment. *Antennas and Propagation Society International Symposium 2008, IEEE,* 2008